(19) Europäisches Patentamt
European Patent Office
Office européen des brevets

(11) Veröffentlichungsnummer: **0 033 893**
**B1**

(12) **EUROPÄISCHE PATENTSCHRIFT**

(45) Veröffentlichungstag der Patentschrift: **03.04.85**

(21) Anmeldenummer: **81100573.5**

(22) Anmeldetag: **27.01.81**

(51) Int. Cl.⁴: **C 08 F 14/06**, C 08 F 2/20, C 08 F 291/00

# (54) Verfahren zur Polymerisation von Vinylchlorid in wässriger Phase.

(30) Priorität: **02.02.80 DE 3003778**

(43) Veröffentlichungstag der Anmeldung: **19.08.81 Patentblatt 81/33**

(45) Bekanntmachung des Hinweises auf die Patenterteilung: **03.04.85 Patentblatt 85/14**

(84) Benannte Vertragsstaaten: **BE DE FR GB IT NL**

(56) Entgegenhaltungen:
**DE-A-1 206 592**
**FR-A-1 318 166**
**FR-A-2 356 679**

(73) Patentinhaber: **HOECHST AKTIENGESELLSCHAFT**
**Postfach 80 03 20**
**D-6230 Frankfurt am Main 80 (DE)**

(72) Erfinder: **Klippert, Heinz, Dr.**
**Hochfellnstrasse 14**
**D-8261 Burgkirchen/Alz (DE)**
Erfinder: **Ulmschneider, Dieter, Dr.**
**Im Flemetz 6**
**D-6240 Königstein/Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 033 893 B1

**Beschreibung**

Gegenstand der Erfindung ist ein Verfahren zur Polymerisation von Vinylchlorid in wäßriger Phase gemäß Patentanspruch 1.

Aus der österreichischen Patentschrift Nr. 232 729 ist ein Verfahren zur Polymerisation von Vinylchlorid in wäßriger Dispersion in Gegenwart von Poly-N-vinylpyrrolidon und monomerlöslichen Polymerisationskatalysatoren bekannt, wobei man neben 0,001 bis 0,5 Gew.-% bezogen auf Vinylchlorid, an Poly-N-vinylpyrrolidon beziehungsweise dessen Derivaten, 0,001 bis 0,5 Gew.-%, bezogen auf Vinylchlorid, an wasserlöslichen Celluloseethern, Polyvinylalkoholen oder Polyvinylphosphaten verwendet. Als Beispiele von Derivaten des Poly-N-vinylpyrrolidons sind Mischpolymerisate aus N-Vinylpyrrolidon und anderen Polymerisierbaren organischen Verbindungen, insbesondere Methyl- und Ethylestern der Acryl- und Methacrylsäure, Vinylacetat und Vinylpropionat sowie Dimethyl- oder Diethylmaleat sowie nacherhitzte wasserlösliche Mischpolymerisate aus N-Vinylpyrrolidon und ungesättigten Carbonsäureamiden genannt, doch liegt hierfür kein Ausführungsbeispiel vor. Das Verfahren bezweckt, Polymerisate zu erzeugen, die in der Wärme, auch wenn sie mit Bleistabilisatoren versetzt sind, keine Verfärbung oder diese erste nach längerer Zeit erleiden. Über eine Verbesserung der Porosität des Polymerkorns, die in der Regel verbesserte Weichmacher-Aufnahme und Entgasbarkeit des Polymeren gewährleistet, ist nichts ausgesagt.

Es ist ferner aus der DE—AS 16 45 380 ein Verfahren zur Polymerisation von Vinylchlorid in wäßriger Suspension in Gegenwart von monomerlöslichen Katalysatoren und Mischpolymerisaten aus Vinylpyrrolidon und ethylenisch ungesättigten Estern als Suspensionsstabilisatoren bekannt, bei dem als Suspensionsstabilisator ein Mischpolymerisat aus Vinylpyrrolidon und einem Alkylacrylat, dessen Alkylgruppe mindestens 6 Kohlenstoffatome enthält, verwendet wird. Das Verfahren bezweckt, ein Polymerisat in Form von Körnern erhöhter Porosität zu erhalten. Die Polymerisation in Gegenwart von anderen Suspensionsstabilisatoren, wie beispielsweise Polyvinylalkohol und die Polymeren von Vinylpyrrolidon oder seine Mischpolymeren mit Vinylacetat oder Acrylamid, wird als mangelhaft bezeichnet, da sie Produkte aus dichten und meistens kugeligen Körnern ergeben, die nur ungenügende Porosität aufweisen.

In neuerer Zeit wurde aus DE—OS 26 29 880 ein Verfahren zur Herstellung von Polyvinylchlorid und Vinylchloridcopolymerisaten mit niedriger Stippenzahl und hohem Weichmacheraufnahmevermögen bekannt, wobei in Gegenwart einer Kombination zweier Schutzkolloide polymerisiert wird, von denen das eine ein Polyvinylacetat mit einem Hydrolysegrad von 40 bis 55 Mol-% und das zweite Schutzkolloid ein wasserlöslicher Polyvinylalkohol oder eine Aminoethylhydroxypropylcellulose oder ein Vinylacetat/Vinylpyrrolidoncopolymeres mit einem Verhältnis von Vinylpyrrolidon zu Vinylacetat im Copolymeren von 50 bis 70 Gew.-% zu 30 bis 50 Gew.-% und einem K-Wert von 25 bis 40 ist. Während das Polyvinylacetat mit einem Hydrolysegrad von 40 bis 55 Mol-% im Wasser weitgehend unlöslich ist, sind die als zweite Mischungskomponente genannten Schutzkolloide offenbar gut wasserlöslich, da ihre Viskosität als 2 %ige Lösung in Wasser gemessen wird und sie auch in Form ihrer wäßrigen Lösung zum Polymerisationsansatz gegeben werden können.

Schließlich ist aus der DE—PS 12 06 592 ein Verfahren zur Herstellung von wäßrigen latexartigen Polymerisatdispersionen durch Polymerisation von radikalisch polymerisierbaren, organischen Verbindungen in wäßriger Phase unter Rühren in Anwesenheit von wasserlöslichen Katalysatoren und polymeren N-Vinylamiden bekannt, mit dem Styrol, Vinylester, Ester der Acryl- bzw. Methacrylsäure oder Mischungen von Vinylacetat mit Dibutylmaleinat in Gegenwart polymerer offenkettiger N-Vinylamide oder ihrer wasserlöslichen beziehungsweise in Wasser dispergierbaren Mischpolymerisate polymerisiert werden, Es sind Mischungen der genannten Dispergiermittel untereinander und mit anderen Dispergiermitteln wie zum Beispiel wasserlöslichen, organischen Kolloiden möglich. Um welche anderen wasserlöslichen, organischen Kolloide es sich handeln soll, wird nicht beschrieben. Es findet sich auch kein Beispiel hierfür. Abgesehen von der Tatsache, daß die letztgenannte Schrift nichts über die Polymerisation von Vinylchlorid aussagt, ist das Ziel des Verfahrens offenbar die Herstellung von latexartigen Polymerisatdispersionen, bei denen die Größe und Ausbildung der Polymerteilchen, die Latexviskosität, die Wasserfestigkeit und Reemulgierbarkeit eines aus der Dispersion hergestellten Filmes in optimaler Weise eingestellt werden kann, wobei die Produkte für Anstrichzwecke und als Klebemittel Verwendung finden. Wie aus den Vergleichsversuchen hervorgeht, ist es offensichtlich nicht das Ziel des beschriebenen Verfahrens, sich absetzende, gut filtrierbare Polymersuspensionen in wäßriger Phase herzustellen.

Die nach den bekannten Verfahren hertestellten Produkte befriedigen, wie nach folgend durch Vergliechsversuche nachgewiesen wird, nicht in allen Fällen. Sie wiesen mindestens einen der folgenden Mängel auf: ungünstige Thermostabilität, nicht ausreichende Porosität des Polymerkorns und damit ungünstige Weichmacher-Aufnahme, unbefriedigende Entfernbarkeit von Restmonomeren, ungünstige Wirschaftlichkeit der Polymerisation beziehungsweise Aufarbeitung, schlechter Geruch des erzeugten Polymeren, schlechte Aufschließbarkeit des Polymerkorns, Stippen (Fischaugen) in Halbzeugen, beispielsweise Folien bei der thermoplastichen Weiterverarbeitung des Polymeren, ungünstige Polymer-Kornverteilung.

Es wurde ein Verfahren gefunden, das ein Produkt mit einer günstigen Eigenschaftskombination

ergibt, welches die oben beschriebenen Mängel nicht oder nur in geringerem Maße besitzt als die Produkte gemäß dem Standder Technik.

Dieses Verfahren zur Polymerisation von Vinylchlorid in wäßriger Phase in Gegenwart von 0 bis 20 Gew.-%, bezogen auf eingesetzte Monomere, mit Vinylchlorid copolymerisierbaren Monomeren oder 0,1 bis 20 Gew.-%, bezogen auf eingesetzte Monomere, mit Vinylchlorid pfropfcopolymerisierbaren Polymeren oder in Gegenwart der genannten Mengen mit Vinylchlorid copolymerisierbarer Monomerer und mit Vinylchlorid pfropfcopolymerisierbarer Polymerer, öllöslichen radikalisch zerfallenden Aktivatoren, einem Gemisch aus 2 oder mehr hochmolekularen, oberflächenaktiven Suspendiermitteln sowie gegebenenfalls in Gegenwart von Emulgatoren, Puffersubstanzen und Molekülgrößenreglern bei 30 bis 80°C ist dadurch gekennzeichnet, daß 0,05 bis 1 Gew.-%, bezogen auf eingesetzte Monomere, eines Suspendiermittelgemisches verwendet werden, welches besteht aus

a) 10 bis 90 Gew.-%, bezogen auf das Gemisch, eines Copolymerisates oder mehrerer Copolymerisate mit einer Viskosität von 1 bis $50 \cdot 10^{-3}$ Pa . s, gemessen in 2 gew.-%iger Lösung in Isopropanol bei 25°C, bestehend aus:

10 bis 50 Gew.-%, bezogen auf das Copolymerisat, polymerisierten Einheiten mindestens einer Verbindung der Formel

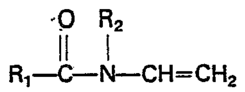 (1),

worin bedeuten:

$R_1$ gleich H oder einen Alkylrest mit 1 bis 4 C-Atomen,

$R_2$ gleich H oder Methyl-

und

50 bis 90 Gew.-%, bezogen auf das Copolymerisat, polymerisierten Einheiten von Vinylacetat sowie aus

b) 90 bis 10 gew.-%, bezogen auf das Suspendiermittelgemisch, mindestens eines Suspendiermittels das ausgewählt ist aus folgenden Substanzen: Methylcellulose, Methylhydroxyethylcellulose, Methylhydroxypropylcellulose mit einem molekularen Substitutionsgrad der Methoxygruppe von 1,4 bis 2,4 und einem molaren Substitutionsgrad der Hydroxyalkoxygruppe, sofern vorhanden, von 0,08 bis 0,28; oder Hydroxyethylcellulose oder Hydroxypropylcellulose mit einem molaren Substitutionsgrad von 1 bis 3,5; oder Aminoethyl-hydroxypropyl-cellulose mit einem molaren Substitutionsgrad der Aminoethylgruppe von 0,05 bis 1 und der Hydroxypropylgruppe von 3 bis 5, wobei die 2 gew.-%ige wäßrige Lösung der genannten Cellulose-ether bei 20°C eine Viskosität von 20 bis $500 \cdot 10^{-3}$ Pa · ausweist oder teilacetylierte Polyvinylalkohole mit 5 bis 25 Gew.-% Acetatgehalt und einer Viskosität der 4 gew.-%igen wäßrigen Lösung bei 20°C von 2 bis $100 \cdot 10^{-3}$ Pa · s.

Die als Komponente a) des Suspendiermittelgemisches angegebenen Copolymeren können nach bekannten Verfahren hergestellt werden, wie beispielsweise beschrieben in DE—PS 1 167 027 und DE—PS 1 176 124.

Sofern sie geringere Gehalte an polymerisierten Vinylacetateinheiten enthalten (etwa 50 bis 65 Gew.-%) können sie als solche der wäßrigen Flotte, in der die Polymerisation stattfinden soll, zugesetzt werden. Es empfiehlt sich jedoch vorher Lösungen der Copolymerisate herzustellen und diese der Polymerisationsflotte zuzusetzen. Als Lösungsmittel kommen in Frage: Wasser, aliphatische Alkohole mit 1 bis 4 C-Atomen, beispielsweise Methanol oder Ethanol, aliphatische Ketone mit 3 bis 5 C-Atomen, beispielsweise Aceton oder Methylethylketon oder aliphatische Carbonsäureester von aliphatischen Alkoholen, die sowohl im Carbonsäure- wie auch im Alkohol-Teil je 1 bis 3 C-Atome enthalten können, beispielsweise Essigsäuremethylester oder Essigsäureethylester. Bei Copolymeren mit vergleichsweise niedrigem Gehalt an polymerisierten Vinylacetatgruppen, beispielsweise 50 bis 65 Gew.-%, ist Wasser das bevorzugte Lösungsmittel. Liegt der Gehalt an einpolymerisierten Vinylacetatgruppen höher, so werden Mischungen von Wasser mit den genannten organischen Lösungsmitteln oder diese Lösungsmittel ohne Wasserzusatz, gegebenenfalls Mischung miteinander verwendet.

Beträgt der Gehalt an einpolymerisierten Vinylacetatgruppen mehr als 90 Gew.-%, so wird eine schnelle Verschlechterung der Porosität des Polymerkorns beobachtet. Dieselbe Erscheinung, wenn auch langsamer abnehmend, wird unterhalb eines Gehaltes von 50 Gew.-% an einpolymerisierten Vinylacetatgruppen im Copolymerisat festgestellt. Mit sinkender Porosität tritt auch eine Verschlechterung der Entgasbarkeit ein. Eine besonders günstige Eigenschaftskombination des erzeugten Vinylchlorid-Polymeren wird mit Suspendiermittelgemischen erreicht, die als Komponente a) ein Copolymerisat enthalten, das 60 bis 80 und insbesondere 65 bis 75 Gew.-%, bezogen auf das Copolymerisat, polymerisierte Einheiten von Vinylacetat und dementsprechend 20 bis 40 und insbesondere 25 bis 35 Gew.-%, bezogen auf das Copolymerisat, polymerisierte Einheiten einer Verbindung der Formel (1) enthält. Vorteilhaft für die Herstellung der Vinylchlorid-Polymeren ist als Komponente a) auch ein Copolymeres, das eine Viskosität von 2 bis $20 \cdot 10^{-3}$ Pa · s, gemessen an der 2 gew.-%igen Lösung in Isopropanol bei 25°C, aufweist.

Das neue Suspendiermittelgemisch soll 10 bis 90 Gew.-%, bezogen auf das Gemisch, der oben näher

beschriebenen Komponente a) und 90 bis 10 Gew.-%, bezogen auf das Gemisch, einer Komponente b) enthalten, die Cellulose-ether und/oder teilacetylierte Polyvinylalkohol beinhaltet. Enthält das Suspendiermittelgemisch mehr als 90 Gew.-% der Komponente a), so werden abfallendes Schüttgewicht und zunehmende Grießbildung (besonders grobe Polymerkörner, die zu vielerlei Schwierigkeiten bei der Polymerisation und anschließenden Weiterverarbeitung führen) festgestellt. Beträgt der Anteil der Komponente a) im Suspendiermittelgemisch weniger als 10 Gew.-%, so bildet das erzeugte Polymere in zunehmendem Maße glasige Körner, die Porosität fällt ab (siehe Vergleichsversuche D und F). Besonders gute Ergebnisse werden mit Suspendiermittelmischungen erreicht, die 25 bis 75 und insbesondere 40 bis 60 Gew.-% der Komponent a) und dementsprechend 75 bis 25 und insbesondere 60 bis 40 Gew.-% der Komponente b) enthalten.

Die komponente a) des Suspendiermittelgemisches kann auch aus einer Mischung von mehreren Copolymeren bestehen, die sich untereinander entweder durch unterschiedliche Gehalte von einpolymerisierten Einheiten von Vinylacetat im Rahmen der gegebenen Grenzen oder durch verschiedene einpolymerisierte Verbindungen der Formel (1) oder durch beides voneinander unterscheiden. Wegen ihrer guten Zugänglichkeit und Wirksamkeit werden Copolymerisate bevorzugt, die einpolymerisierte Einheiten von N-Vinyl-N-methyl-acetamid und/oder N-Vinyl-acetamid neben Vinylacetat enthalten.

Als Komponente b) des Suspendiermittelgemisches werden an sich als Suspendiermittel bekannte Celluloseether und teilacetylierte Polyvinylalkohole verwendet. Auch die Komponente b) kann aus einem Gemisch mehrerer der genannten Verbindungen bestehen. Besonders gute Ergebnisse werden mit Methylhydroxypropylcellulose mit einem molekularen Substitutionsgrad der Methoxygruppe von 1,4 bis 2,4 und einem molaren Substitutionsgrad der Hydroxypropylgruppe von 0,08 bis 0,28, deren 2 gew.-%ige wäßrige Lösung bei 20°C eine Viskosität von 20 bis $500 \cdot 100^{-3}$ Pa · s aufweist, sowie mit teilacetylierten Polyvinylalkoholen mit 5 bis 25 Gew.-% Acetatgehalt und einer Viskosität der 4 gew.-%igen wäßrigen Lösung bei 20°C von 2 bis 100 und insbesondere von 5 bis $50 \cdot 10^{-3}$ Pa · s erhalten. Auch in der zuletzt genannten Auswahl werden vorteilhaft Mischungen des Celluloseethers mit einem teilacetylierten Polyvinylalkohol eingesetzt.

Der molare Substitutionsgrad der Cellulosealkyl- beziehungsweise Cellulosealkyl-hydroxyalkylether wird aus den analytisch ermittelten Gew.-%-Alkoxygruppen beziehungsweise —$OC_2H_4$- oder —$OC_3H_6$-Gruppen nach folgender Formel errechnet:

$$MS = \frac{G\%\ (ana) \cdot 162}{M(ana)\ [100 - \Sigma G\%\ (ana)\ \frac{M(add)}{M(ana)}}$$

hierin bedeuten:

MS=Molarer Substitutionsgrad
M(ana)=Molgewicht der analysierten Gruppe
M(add)=Molgewicht der addierten Gruppe
G% (ana)=Gewichtsprozentgehalt der analysierten Gruppe.

Der molare Substitutionsgrad gibt an, wieviel Alkylbeziehungsweise Hydroxyalkylreste je dehydratisierte Glykoseeinheit im Celluloseether vorliegen.

Die Komponente b) des Suspendiermittelgemisches wird der Polymerisationsflotte im allgemeinen als wäßrige Lösung zugesetzt. Diese kann zur Verbesserung der Löslichkeit des entsprechenden Suspendiermittels mit Wasser mischbare aliphatische Alkohole, beispielsweise Methanol oder Ethanol enthalten.

Das gesamte Suspendiermittelgemisch wird in einer Menge von 0,05 bis 1 Gew-%, bezogen auf eingesetzte Monomere, verwendet. Oberhalb Gew.-% Zusatzmenge wird das erzeugte Polymere zunehmend feinkörnig, es treten Schwierigkeiten durch Stauben beim Verarbeiten des trockenen Polymerpulvers ein, Rieselfähigkeit und Schüttgewicht nehmen ab. Werden weniger als 0,05 Gew.-% der Suspendiermittelmischung verwendet, treten in zunehmendem Maße Grobanteile und Agglomerate von Polymerkörnern, sogenannte Grießbildung auf, die erzeugten Polymersuspensionen werden instabil, was bis zur Blockbildung im Polymerisationskessel führen kann. Vorzugsweise wird das Suspendiermittelgemisch in Mengen von 0,1 bis 0,3 Gew.-%, bezogen auf eingesetzte Monomere, verwendet.

Das erfindungsgemäße Verfahren eignet sich zur Polymerisation von Vinylchlorid in wäßriger Phase in Gegenwart von 0 bis 20 Gew.-%, bezogen auf eingesetzte Monomere, mit Vinylchlorid copolymerisierbaren Monomeren, wobei gute Ergebnisse in Gegenwart von 0 bis 10 Gew.-% copolymerisierbarer Monomerer erzielt werden. Insbesondere gute Ergebnisse liefert auch die Homopolymerisation von Vinylchlorid. Das Verfahren kann auch zur Propfcopolymerisation von Vinylchlorid verwendet werden, wobei neben Vinylchlorid noch andere copolymeriserbare Monomere zugegen sein können. Es werden hierbei 0,1 bis 20 Gew.-%, vorzugsweise 1 bis 15 Gew.-%, von Polymeren, die mit Vinylchlorid pfropfcopolymerisierbar sind, eingesetzt.

Die erfindungsgemäße Herstellung der Vinylchlorid-Homo-, -Co- oder -Pfropfcopolymerisate kann nach kontinuierlichem oder Chargen-Polymerisationsverfahren, mit oder ohne Verwendung eines Saat-Vorpolymerisats erfolgen. Es wird dabei in wäßriger Suspension in Gegenwart von 0,001 bis 3

Gew.-%, vorzugsweise 0,01 bis 0,3 Gew.-%, bezogen auf Monomere, radikal-bildener Katalysatoren, wie zum Beispiel Diaryl-, Diacylperoxide, wie Diacetyl-, Acetylbenzoyl-, Di-lauroyl-, Dibenzoyl-, Bis-2,4-dichlorbenzoyl-, Bis-2-methylbenzoyl-peroxid; Dialkylperoxide wie Di-tert.-butylperoxid, Perester wir tert.-Butylpercarbonat; tert.-Butylperacetat, tert.-Butylperoctoat, tert.-Butylperpivalat; Dialkylperoxy-dicarbonate wie Diisopropyl-, Diethylhexyl-, Dicyclohexyl-, Diethylcyclohexylperoxy-dicarbonate; gemischte Anhydride von organischen Sulfopersäuren und organisch Säuren, wie Acetylcyclohexylsulfonylperoxid; als Polymerisationskatalysatoren bekannte Azoverbindungen wie Azoisobuttersäurenitril, außerdem gegebenenfalls Zusätzen von Persulfaten, wie Kalium-, Natrium- oder Ammonium-persulfat, Wasserstoffperoxid, tert.-Butylhydroperoxid oder anderen wasserlöslichen Peroxiden sowie Mischungen verschiedener Katalysatoren polymerisiert, wobei peroxidische Katalysatoren auch in Gegenwart von 0,01 bis 1 Gew.-%, bezogen auf Monomere, einer oder mehrerer reduzierender Substanzen, die zum Aufbau eines Redox-Katalysatorsystems geeignet sind, wie zum Beispiel Sulfite, Bisulfite, Dithionite, Thiosulfate, Aldehydsulfoxylate, zum Beispiel Na-Formaldehydsulfoxylat eingesetzt werden können.

Außerdem kann die Polymerisation in Gegenwart von 0,01 bis 1 Gew.-%, bezogen auf Monomere, von einem oder mehreren nichtionogenen Emulgatoren durchgeführt werden, wobei die Emulgatoren sowohl zur Voremulgierung der Monomeren allein, wie auch bei der eigentlichen Polymerisation in Mischung mit den obengenannten Suspendiermitteln, eingesetzt werden können.

Als nichtionogene Emulgatoren sind beispielsweise geeignet: Polyoxyethylenester von Fettsäuren sowie Polypropylenoxid-Polyethylenoxid-Kondensationsprodukte.

Neben Katalysatoren, dem erfindungsgemäßen Suspendiermittelgemisch und gegebenenfalls Emulgatoren kann die Polymerisation in Gegenwart von Puffersubstanzen, beispielsweise Alkaliacetate, Borax; Alkalicarbonate, Alkaliphosphate, Ammoniak oder Ammoniumsalzen von Carbonsäuren sowie von Molekülgrößenreglern, wie beispielsweise aliphatische Aldehyde mit 2 bis 4 Kohlenstoffatomen, Chlor- oder Bromkohlenwasserstoffe, wie zum Beispiel Di- und Trichlorethylen, Chloroform, Bromoform, Methylenchlorid sowie Mercaptanen durchgeführt werden. Beispiele weiterer geeigneter Polymerisationshilfsstoffe finden sich in H. Kainer "Polyvinylchlorid und Vinylchlorid-Mischpolymerisate", Auflage 1965, Seiten 13 bis 34.

Zur Copolymerisation mit Vinylchlorid sind beispielsweise eines oder mehrere folgender Monomerer geeignet: Olefine, wie Ethylen oder Propylen, Vinylester von geradkettigen oder verzweigten Carbonsäuren mit 2 bis 20, vorzugsweise 2 bis 4 Kohlenstoffatomen, wie Vinylacetat, -propionat, -butyrat, -2-ethylhexoat, Vinylisotridecansäureester; Vinylhalogenide, wie Vinylfluorid, Vinylidenfluorid, Vinylidenchlorid, Vinylether, Vinylpyridin, ungesättigte Säuren, wie Malein-, Fumar-, Acryl-, Methacrylsäure und deren Mono- oder Diester mit Mono- oder Dialkoholen mit 1 bis 10 Kohlenstoffatomen; Maleinsäureanhydrid; Maleinsäureimid sowie dessen N-Substitutionsprodukte mit aromatischen, cycloaliphatischen sowie gegebenenfalls verzweigten, aliphatischen Substitutionen; Acrylnitril, Styrol.

Zur Pfropfcopolymerisation können beispielsweise vernetzte oder unvernetzte elastomere Polymerisate verwendet werden, die durch Polymerisation von einem oder mehreren folgender Monomerer erhalten wurden: Diene wie Butadien, Cyclopentadien; Olefine wie Ethylen, Propylen; Styrol, ungesättigte Säuren, wie Acryl- oder Methacrylsäure sowie deren Ester mit Mono- oder Dialkoholen mit 1 bis 10 Kohlenstoffatomen, Acrylnitril, Vinylverbindungen wie Vinylester von geradkettigen oder verzweigten Carbonsäuren mit 2 bis 20, vorzugsweise 2 bis 4 Kohlenstoffatomen, Vinylhalogenide wie Vinylidenchlorid und Vinylchlorid. Letzteres jedoch nur mit mindestens einem der zuvor genannten Monomeren.

Die Polymerisation wird bei Temperaturen von 30 bis 80, vorzugsweise bei 45 bis 75°C, ausgeführt, wobei gegebenenfalls unter Rückflußkühlung, Verwendung von 2 oder mehreren Rührgeschwindigkeiten und/oder Temperaturstufen polymerisiert werden kann. Der pH-Wert der Polymerisationsflotte sollte zwischen 2 und etwa 10 liegen.

Während der Polymerisation können ein oder mehrere folgender Stoffe, gegebenenfalls unter Konstanthaltung des Füllvolumens des Polymerisationsgefäßes, zugegeben werden: Wasser, wäßrige Lösungen, Monomere, Katalysatoren, Cokatalysatoren, weitere Polymerisationshilfsstoffe, wie zum Beispiel Regler, Puffersubstanzen, Emulgatoren, Suspendiermittel.

Erfindungsgemäß hergestellte Polymerisate können nach bekannten Verfahren sowohl in wäßriger Dispersion, als wasserfeuchter Kuchen oder im pulverförmigen feuchten oder trockenen Zustand von restlichen Monomeren, insbesondere Vinylchlorid befreit werden.

Die Aufarbeitung der wäßrigen Polymerisat-Dispersion zum trockenen Pulver erfolgt ebenfalls nach bekannten Methoden, beispielsweise durch Dekantieren der Hauptmenge der wäßrigen Phase in einer Dekannter-Zentrifuge und Trocknen des so erhaltenen wasserfeuchten Kuchens in einem Strom- oder Wirbelbett-Trockner. So erhaltene, pulverförmige Polymerisate können wie bisher übliche Suspensionspolymerisate des Vinylchlorids, beispielsweise durch Strangpressen, Spritzgießen oder Kalandrieren, thermoplastich verarbeitet werden.

Durch die günstige Eigenschaftskombination der erfindungsgemäß hergestellten Polymerisate bezüglich Schüttgewicht, Weichmacheraufnahme, Korngrößenverteilung und geringe Neigung zur Bildung von Fischaugen (Stippen) eignen sich die Polymerisate besonders für Verarbeitungsvorgänge, die mit hoher Leistung hochqualifizierte, insbesondere glasklare, optisch einwandfreie Artikel erzeugen sollen. Durch die leichte Entgasbarkeit wird eine wirtschaftlich günstige, physiologisch einwandfreie Produktion

der erfindungsgemäßen Polymerisate ermöglicht, wie auch deren physiologisch einwandfreie Weiterverarbeitung und Verwendung der daraus erzeugten Artikel gewährleistet.

Nachfolgende Beispiele sollen die Erfindung näher erläutern. Zum Vergleich mit Verfahren gemäß dem Stande der Technik wurden eine Reihe von Vergleichsversuchen durchgeführt, die ebenfalls nachfolgend beschrieben werden und zum besseren Vergleich zusammen mit den Ergebnissen der erfindungsgemäßen Beispiele in einer Tabelle zusammengestellt sind.

Die Meßergebnisse wurden nach folgenden Methoden ermittelt:

1. K-Wert nach DIN 53 726, Lösungsmittel: Cyclohexanon;
2. Schüttgewicht nach DIN 53 468;
3. Weichmacheraufnahme (gleichzeitig ein Maß für die Porosität) nach DIN 53 417;
4. Warmmischbarkeit (sogenannter "dry-blend-test"): In einem Planetenmischer der Firma Brabender vom Typ 600 S werden bei 88°C und 100 Upm 400 g Vinylchlorid-Polymerisat 5 Minuten lang vorgewärmt und dann 200 g Die-ethylhexyl-phthalat zugemischt. Während der Zumischung und eine Zeit danach wird das Drehmoment des Mischers ständig beobachtet. Je nach der Weichmacheraufnahmefähigkeit des Polymerisates steigt nach Zugabe des Di-ethylhexyl-phthalats das Drehmoment mehr ode weniger schnell an, um danach wieder abzusinken. Der Minimalwert des Drehmoments wird als "Trockenpunkt" bezeichnet. Die Zeit von der Zugabe des Di-ethylhexyl-phthalats bis zum Erreichen des "Trockenpunktes" ist als charakteristische Größe für die Weichmacheraufnahme des vinylchlorid-Polymerisatpulvers in nachfolgender Tabelle in Minuten und Sekunden aufgeführt.
5. Korngrößenverteilung nach DIN 53 734. Es ist jeweils die Menge der Teilchen in Gew.-%, bezogen auf die Gesamtmenge des eingesetzten Polymeren angegeben die über 250 µm und die unter 63 µm liegen.
6. Stippen (Fischaugen): Die Zahl der Stippen wird wie folgt gemessen:

210 g Vinylchlorid-Polymerisat
84 g Di-2-ethylhexyl-phthalat
3 g Titandioxid (Rutil-Typ) }
3 g Barium-cadmium-laurat (Stabilisator BC 12 Firma Ciba-Geigy) } als
5,7 g Di-2-ethylhexyl-phthalat } verriebene
0,3 g Phthalocyanin-blau (Heliogenblau® 6902 K Fa. BASF) } Paste

werden innig vermischt.

Aus dieser Mischung wird bei 140°C Walzentemperatur ein Walzfell hergestellt, das nach 20 Minuten in 200 µm Dicke abgenommen und gekühlt wird. Das Fell wird über eine Lampe gespannt. Die unpigmentierten Teilchen in einer Fläche von 100 $cm^2$ werden ausgezählt.

7. Restvinylchlorid-Gehalt: gaschromatographisch nach der "head-space"-Methode (Zeitschrift für analytische Chemie, *255* (1971), Seiten 345 bis 350) ermittelt.

Beispiel 1

In einem Polymerisationskessel aus rostfreiem Stahl, der mit Doppelmantel zur Temperierung und einem stufenlos regelbaren Impellerrührer ausgerüstet ist, werden folgende Komponenten vorgelegt:

170 000 Gew.-Teile entmineralisiertes Wasser
100 Gew.-Teile eines statistischen Copolymerisates aus 35 Gew.-% N-Vinyl-N-methyl-acetamid und 65 Gew.-% Vinylacetat mit einer Viskosität von $3 \cdot 10^{-3}$ Pa · s, gemessen in 2 gew.-%iger Lösung in Isopropanol bei 25°C;
44 Gew.-Teile eines teilacetylierten Polyvinylalkohols mit 22 Gew.-% Acetatgehalt und einer Viskosität von $11 \cdot 10^{-3}$ Pa · s, gemessen in 4 gew.-%iger wäßriger Lösung bei 20°C;
32 Gew.-Teile Methyl-hydroxypropylcellulose mit einem molekularen Substitutionsgrad der Methoxygruppe von 1,84 und der Hydroxypropylgruppe von 0,16 mit einer Viskosität von $45 \cdot 10^{-3}$ Pa · s, gemessen in 2 gew.-%iger wäßriger Lösung bei 20°C;
55 Gew.-Teile Di-(2-ethylhexyl)-peroxydicarbonat (65 gew.-%ige Lösung in Aliphaten).

Unter Rühren der Flüssigkeit wird die im Kessel enthaltene Luft durch Stickstoff verdrängt und dann werden 100 000 Gew.-Teile Vinylchlorid zugegeben. Das Gemisch wird auf 53°C erwärmt und bei dieser Temperatur bis zu einem Druckabfall auf 0,4 MPa polymerisiert.

Nun wird der Polymerisationskessel auf Atmosphärendruck entspannt und evakuiert. Danach wird gekühlt und zweimal je 1 Liter der gebildeten Polymerisationsdispersion entnommen. 1 Liter hiervon wird in einen 2-Liter-Glaskolben gegeben, auf 80°C erwärmt und unter Konstanthaltung dieser Temperatur unter Rühren bei 0,048 Mpa 6 Gew.-%, bezogen auf eingesetzte Dispersion, Wasser innerhalb 60 Minuten verdampft. Die Menge des verdampften Wassers wird durch Kondensation in einer Falle bestimmt. Aus der Suspension werden alle 10 Minuten Proben entnommen, filtriert und in dem 20 Gew.-% Wasser enthaltenden Polymerisatkuchen der Rest-Vinylchlorid-Gehalt gaschromatographisch bestimmt. Der nach 20 Minuten ermittelte Wert ist in Tabelle 1 angegeben.

Der zweite aus dem Polymerisationskessel entnommene Liter Dispersion wird sofort (ohne die oben beschriebene Wärmebehandlung bei 80°C) filtriert und in dem 20 Gew.-% Wasser enthaltenden Polymerisatkuchen der Rest-Vinylchlorid-Gehalt gaschromatographisch bestimmt. Der ermittelte Wert ist als "Blindwert" in Tabelle 1 angegeben.

Der Rest des Kesselinhaltes wird filtriert und getrocknet. An dem so erhaltenen Polyvinylchlorid-Pulver werden die weiteren Ausprüfungen (siehe Seite 14, Zeile 28 bis Seite 16, Zeile 2) durchgeführt, deren Ergebnis in Tabelle 1 aufgeführt ist.

Beispiel 2

Es wird verfahren, wie in Beispiel 1 beschrieben, jedoch anstelle der 100 Gewichtsteile des Copolymerisates (35/65) 100 Gewichtsteile eines statistischen Copolymerisates eingesetzt, das aus 25 Gew.-% N-Vinyl-N-methylacetamid und 75 Gew.-% Vinylacetat besteht und eine Viskosität von $6 \cdot 10^{-3}$ Pa s, gemessen in 2 gew.-%iger Lösung in Isopropanol bei 25°C aufweist. Die am erhaltenen Polymerisat gemessenen Werte sind in Tabelle 1 zusammengefaßt.

Vergleichsversuch A

Es wird verfahren, wie in Beispiel 1 beschrieben, mit dem Unterschied, daß anstelle der 100 Gew.-Teile des Copolymerisates aus N-Vinyl-N-methylacetamid und Vinylacetat 200 Gew.-Teile Sorbitanmonolaurat eingesetzt werden. Werte siehe Tabelle 1.

Vergleichsversuch B

Dieser Vergleichsversuch wird in Anlehnung an die DE—OS 26 29 880 durchgeführt. Es wird verfahren, wie in Beispiel 1 beschrieben, anstelle der 100 Gew.-Teile des Copolymerisats aus 35 Gew.-% N-Vinyl-N-methylacetamids und 65 Gew.-% Vinylacetat werden 100 Gew.-Teile eines statistischen Copolymerisates aus 60 Gew.-% N-Vinyl-N-methylacetamid und 40 Gew.-% Vinylacetat eingesetzt, das eine Viskosität von $4 \cdot 10^{-3}$ Pa · s, gemessen in 2 gew.-%iger Lösung in Isopropanol bei 25°C und einem K-Wert von 33, aufweist. Am erzeugten Polymeren gemessene Werte siehe Tabelle 1.

Vergleichsversuch C

Dieser Vergleichsversuch wird in Anlehnung an die DE—OS 16 45 380 durchgeführt. Es wird verfahren, wie in Beispiel 1 beschrieben, jedoch werden anstelle der 100 Gew.-Teile eines Copolymerisates aus N-Vinyl-N-methylacetamid und Vinylacetat 100 Gew.-Teile eines Copolymerisates aus 90 Gew.-% Vinylpyrrolidon und 10 Gew.-% 2-Ethylhexylacrylat eingesetzt, das eines Viskosität von $4 \cdot 10^{-3}$ Pa · s, gemessen in 2 gew.-%iger Lösung in Isopropanol bei 25°C, aufweist. Am erzeugten Polymeren gemessene Werte siehe Tabelle 1.

Vergleichsversuch D

Es wird verfahren, wie in Beispiel 1 beschrieben, jedoch werden die 100 Gew.-Teile des Copolymerisates aus N-Vinyl-N-methylacetamid und Vinylacetat weggelasen. Am erzeugten Polymeren ermittelte Werte siehe Tabelle 1.

Beispiel 3

Im gleichen Apparat, wie in Beispiel 1 beschrieben, werden folgende Komponenten vorgelegt:

170 000 Gew.-Teile entmineralisiertes Wasser
- 50 Gew.-Teile eines statistischen Copolymerisats aus 35 Gew.-% N-Vinyl-N-methylacetamids und 65 Gew.-% Vinylacetat mit einer Viskosität von $3 \cdot 10^{-3}$ Pa · s, gemessen in 2 gew.-%iger Lösung in Isopropanol bei 25°C;
- 45 Gew.-Teile eines teilacetylierten Polyvinylalkohols mit 21 Gew.-% Acetatgehalt und einer Viskosität von $5 \cdot 10^{-3}$ Pa · s, gemessen in 4 gew.-%iger wäßriger Lösung bei 20°C;
- 35 Gew.-Teile Hydroxypropylcellulose molarer Substitutionsgrad=1,34, Viskosität der 2 gew.-%igen wäßrigen Lösung bei 20°C=$30 \cdot 10^{-3}$ Pa · s;
- 55 Gew.-Teile Di-(2-ethylhexyl)-peroxydicarbonat (65 gew.-%ige Lösung in Aliphaten);

sodann wird, wie in Beispiel 1 beschrieben, weiterverfahren. Am erzeugten Polymeren ermittelte Werte siehe Tabelle 1.

Beispiel 4

In einer Apparatur, die ebenso aufgebaut ist, wie in Beispiel 1 beschrieben, werden folgende Komponenten vorgelegt:

15 000 Gew.-Teil entmineralisiertes Wasser
- 10 Gew.-Teile eines statistischen Copolymerisates aus 35 Gew.-% N-Vinyl-N-methylacetamid und 65 Gew.-% Vinylacetat mit einer Viskosität von $3 \cdot 10^{-3}$ Pa · s, gemessen in 2 gew.-%iger Lösung in Isopropanol bei 25°C;
- 12 Gew.-Teile eines teilacetylierten Polyvinylalkohols mit 15 Gew.-% Acetatgehalt und einer Viskosität von $35 \cdot 10^{-3}$ Pa · s, gemessen in 4 gew.-%iger wäßriger Lösung bei 20°C;
- 2 Gew.-Teile Di-(2-ethylhexyl)-peroxydicarbonat (65 gew.-%ig in Aliphaten);
- 5 Gew.-Teil Di-lauroylperoxid;
- 6 Gew.-Teile Ammoniumhydrogencarbonat.

Unter Rühren der Flüssigkeit wird die im Kessel enthaltene Luft durch Stickstoff verdrängt und dann

8800 Gew.-Teile Vinylchlorid und 1200 Gew.-Teile Vinylacetat zugegeben. Das Gemisch wird auf 62°C erwärmt und bei dieser Temperatur bis zu einem Druckabfall von 0,6 MPa polymerisiert.

Anschließend wird weiterverfahren, wie in Beispiel 1 beschrieben, jedoch werden aus der Suspension während der Verdampfung des Wassers alle 15 Minuten Proben entnommen.

Die am erzeugten Polymeren gemessenen Werte sind in Tabelle 2 aufgeführt.

Vergleichsversuch E

Es wird verfahren, wie in Beispiel 3 beschrieben, doch werden anstelle der 10 Gew.-Teile des Copolymerisates aus N-Vinyl-N-methylacetamid und Vinylacetat 10 Gew.-Teile eines zu 50% hydrolysierten Polyvinylacetats mit 33 Gew.-% Acetatgehalt eingesetzt, das eine Viskositätszahl von 15 $cm^3/g$, gemessen nach DIN 53 728 im Methanol, bei einer Konzentration von 10 g/l aufweist.

Am erzeugten Polymeren gemessen Werte siehe Tabelle 2.

Vergleichsversuch F

Es wird verfahren wie in Beispiel 3 beschrieben, jedoch werden die 10 Gew.-Teile des Copolymerisates aus N-Vinyl-N-methylacetamid und Vinylacetat weggelassen.

Am erzeugten Polymeren gemessene Werte siehe Tabelle 2.

TABELLE 1

| | K-Wert | Schütt-gewicht [g/l] | Weichmacher-aufnahme [%] | Warmmisch-barkeit | Korngrößenver-teilung >250 µm [%] | <63 µm [%] | Stippen (Fischaugen) [pro 100 $cm^2$] | Rest-Vinylchlorid-gehalt *) Blind-wert | nach 20 minuten |
|---|---|---|---|---|---|---|---|---|---|
| Beispiel 1 | 70 | 435 | 42 | 3'15'' | 0 | 0 | 5 | 7600 | <1 |
| Beispiel 2 | 71 | 440 | 40 | 3'20'' | 0 | 0 | 2 | 8400 | 2 |
| Vergleichs-beispiel A | 70 | 465 | 32 | 4'30'' | 3 | 1 | 24 | 5300 | 6 |
| Vergleichs-beispiel B | 70 | 450 | 29 | 4'45'' | 1 | 1 | 15 | 9600 | 8 |
| Vergleichs-beispiel C | 71 | 455 | 18 | 5'20'' | 16 | 0 | 300 | 6300 | 24 |
| Vergleichs-beispiel D | 70 | 475 | 18 | 5'30'' | 18 | 0 | 200 | 7500 | 78 |
| Beispiel 3 | 70 | 435 | 41 | 3'25'' | 4 | 0 | 10 | 6900 | <1 |

*) Angaben in Gewichtsteilen Vinylchlorid in 1 000 000 Gewichtsteilen feuchtem Polymeren mit 20% Wassergehalt

TABELLE 2

| | K-Wert | Schütt-gewicht [g/l] | Weichmacher-aufnahme [%] | Korngrößenverteilung >250 µm [%] | <63 µm [%] | Rest-Vinylchlorid-gehalt *) Blind-wert | nach 45 Minuten |
|---|---|---|---|---|---|---|---|
| Beispiel 4 | 58 | 500 | 15 | 0 | 5 | 10 800 | 5 |
| Vergleichsbeispiel E | 58 | 515 | 12 | 0 | 6 | 9 100 | 10 |
| Vergleichsbeispiel F | 58 | 560 | 6 | 1 | 10 | 9 600 | 200 |

*) Angaben in Gewichtsteilen Vinylchlorid in 1 000 000 Gewichtsteilen feuchtem Polymeren mit 20% Wassergehalt

**Patentansprüche**

1. Verfahren zur Polymerisation von Vinylchlorid in wäßriger Phase in Gegenwart von 0 bis 20 Gew.-%, bezogen auf eingesetzte Monomere, mit Vinylchlorid copolymerisierbaren Monomeren oder in Gegenwart von 0,1 bis 20 Gew.-%, bezogen auf eingesetzte Monomere, mit Vinylchlorid pfropfcopolymerisierbaren Polymeren oder in Gegenwart der genannten Mengen mit Vinylchlorid copolymerisierbarer Monomerer und mit Vinylchlorid pfropfcopolymerisierbarer Polymerer, öllöslichen radikalischen Aktivatoren, einem Gemisch aus zwei oder mehr hochmolekularen, oberflächenaktiven Suspendiermitteln sowie gegebenenfalls in Gegenwart von Emulgatoren, Puffersubstanzen und Molekülgrößenreglern bei 30 bis 80°C, dadurch gekennzeichnet, daß 0,05 bis 1 Gew.-%, bezogen auf eingesetzte Monomere, eines Suspendiermittelgemisches versendet werden, welches besteht aus:

a) 10 bis 90 Gew.-%, bezogen auf das Gemisch, eines Copolymerisates oder mehrerer Copolymerisate mit einer Viskosität von 1 bis 50 · $10^{-3}$ Pa · s, gemessen in 2 gew.-%iger Lösung in Isopropanol bei 25°C, bestehend aus: 10 bis 50 Gew.-%, bezogen auf das Copolymerisat, polymerisierten Einheiten mindestens einer Verbindung der Formel

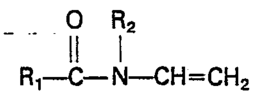
(1),

worin bedeuten:

$R_1$ gleich H oder einen Alkylrest mit 1 bis 4 C-Atomen,

$R_2$ gleich H oder $CH_3$—, und

50 bis 90 Gew.-%, bezogen auf das Copolymerisat, polymerisierten Einheiten von Vinylacetat sowie aus

b) 90 bis 10 Gew.-%, bezogen auf das Suspendiermittelgemisch, mindestens eines Suspendiermittels, das ausgewählt ist aus folgenden Substanzen: Methylcellulose, Methylhydroxyethylcellulose, Methylhydroxypropylcellulose mit einem molekularen Substitutionsgrad der Methoxygruppe von 1,4 bis 2,4 und einem molaren Substitutionsgrad der Hydroxyalkoxygruppe, sofern vorhanden, von 0,08 bis 0,28; oder Hydroxyethylcellulose oder Hydroxypropylcellulose mit einem molaren Substitutionsgrad von 1 bis 3,5; oder Aminoethyl-hydroxypropylcellulose mit einem molaren Substitutionsgrad der Aminoethylgruppe von 0,05 bis 1 und der Hydroxypropylgruppe von 3 bis 5, wobei die 2 gew.-%ige wäßrige Lösung der genannten Celluloseether bei 20°C eine Viskosität von 20 bis 500 · $10^{-3}$ Pa · s aufweist oder teilacetylierte Polyvinylalkohole mit 5 bis 25 Gew.-% Acetatgehalt und einer Viskosität der 4 gew.-%igen wäßrigen Lösung bei 20°C von 2 bis 100 · $10^{-3}$ Pa · s.

2. Verfahren nach Anspruch 1, dadurch gekennzeichnet, daß 0,1 bis 0,3 Gew.-%, bezogen auf eingesetzte Monomere, des Suspendiermittelgemisches eingesetzt werden.

3. Verfahren nach Ansprüchen 1 oder 2, dadurch gekennzeichnet, daß als Komponente a) des Suspendiermittelgemisches ein Copolymerisat eingesetzt wird, das zu 20 bis 40 Gew.-%, bezogen auf das Copolymerisat, polymerisierten Einheiten mindestens einer Verbindung der Formel (1) und aus 80 bis 60 Gew.-%, bezogen auf das Copolymerisat, aus polymerisierten Einheiten von Vinylacetat besteht.

4. Verfahren nach einem der Ansprüche 1 bis 3, dadurch gekennzeichnet, daß als Komponente a) des Suspendiermittelgemisches mindestens ein Copolymerisat des Vinylacetats mit N-Vinyl-N-methylacetamid und/oder mit N-Vinylacetamid eingesetzt wird.

5. Verfahren nach einem der Ansprüche 1 bis 4, dadurch gekennzeichnet, daß das Suspendiermittelgemisch 25 bis 75 Gew.-%, bezogen auf das Gemisch, der Komponente a) und 75 bis 25 Gew.-%, bezogen auf das Gemisch, der Komponente b) enthält.

6. Verfahren nach einem der Ansprüche 1 bis 5, dadurch gekennzeichnet, daß als Komponente b) des Suspendiermittel gemisches mindestens eine der folgenden Verbindungen eingesetzt wird: Methylhydroxypropylcellulose mit einem molekularen Substitutiongrad der Methoxygruppe von 1,4 bis 2,4 und der Hydroxypropylgruppe von 0,08 bis 0,28, deren 2 gew.-%ige wäßrige Lösung bei 20°C eine Viskosität von 20 bis 500 · $10^{-3}$ Pa · s aufweist, oder ein teilacetylierter Polyvinylalkohol mit 5 bis 25 Gew.-% Acetatgehalt und einer Viskosität der 4 gew.-%igen wäßrigen Lösung bei 20°C von 2 bis 100 · $10^{-3}$ Pa · s.

**Revendications**

1. Procédé de polymérisation du chlorure de vinyle en phase aqueuse, à une température de 30 à 80°C, en présence de 0 à 20% en poids, par rapport aux monomères mis en jeu, de monomères copolymérisables avec le chlorure de vinyle, ou en présence de 0,1 à 20% en poids, par rapport aux monomères mis en jeu, de polymères copolymérisables par greffage avec le chlorure de vinyle, ou en présence des quantités indiquées de monomères copolymérisables avec le chlorure de vinyle et de polymères copolymérisables par greffage avec le chlorure de vinyle, d'activeurs radicalaires solubles dans les huiles, d'un mélange de deux ou de plus de deux agents de suspension surfactifs à haut poids moléculaire, et éventuellement en présence d'émulsionnants, de substances tampons et de substances ayant un effet régulateur sur la grandeur des molécules, procédé caractérisé en ce qu'on utilise de 0,05 à 1% en poids, par rapport aux monomères mis en jeu, d'un mélange d'agents de suspension constitué:

a) de 10 à 90% en poids, par rapport au mélange, d'au moins un ou de plusieurs copolymeres ayant une viscosité de 1 à 50 · $10^{-3}$ Pa · s, mesurée à 25°C sur une solution à 2% en poids dans l'isopropanol, et constitué:

— de 10 à 50% en poids, par rapport au copolymère, de motifs polymérisés d'au moins un composé répondant à la formule (1):

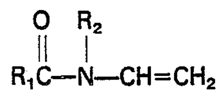 (1)

dans laquelle:

$R_1$ représente l'hydrogène ou un radical alkyle contenant de 1 à 4 atomes de carbone et
$R_2$ représente l'hydrogène ou un radical —$CH_3$, et

— de 50 à 90% en poids, par rapport au copolymère, de motifs polymérisés d'acétate de vinyle,

b) de 90 à 10% en poids, par rapport au mélange d'agents de suspension, d'au moins un agent de suspension choisi dans l'ensemble constitué par la méthylcellulose, la méthylhydroxyéthyl-cellulose, la méthyl-hydroxypropyl-cellulose, chacune de ces substances ayant un degré de substitution moléculaire par le radical méthoxy de 1,4 à 2,4 et un degré de substitution moléculaire par le radical hydroxy-alcoxy, lorsqu'il y en a un, de 0,08 à 0,28; l'hydroxyéthyl-cellulose et l'hydroxypropyl-cellulose, chacune de ces substances ayant un degré de substitution moléculaire de 1 à 3,5; et l'aminoéthyl-hydroxypropyl-cellulose ayant un degré de substitution molaire par le radical aminoéthyle de 0,05 à 1 et par le radical hydroxypropyle de 3 à 5, une solution aqueuse à 2% en poids des éthers cellulosiques mentionnés ayant, à 20°C, une viscosité de 20 à 500 · $10^{-3}$ Pa · s; et les poly-(alcools vinyliques) partiellement acétylés qui ont une teneur en radicaux acétyles de 5 à 25% en poids et une viscosité, mesurée à 20°C sur une solution aqueuse à 4% en poids, de 2 à 100 · $10^{-3}$ Pa · s.

2. Procédé selon la revendication 1 caractérisé en ce qu'on utilise de 0,1 à 0,3% en poids du mélange d'agents de suspension par rapport aux monomères mis en jeu.

3. Procédé selon l'une des revendications 1 et 2, caractérisé en ce qu'on utilise, comme composante (a) du mélange d'agents de suspension, un copolymère constitué de 20 a 40% en poids, par rapport au copolymère, de motifs polymérisés d'au moins un composé de formule (1) et de 80 à 60% en poids, par rapport au copolymère, de motifs d'acétate de vinyle polymérisés.

4. Procédé selon l'une quelconque des revendications 1 à 3, caractérisé en ce qu'on utilise, comme composante (a) du mélange d'agents de suspension, au moins un copolymère de l'acétate de vinyle avec le N-vinyl-N-méthyl-acétamide et/ou avec le N-vinyl-acétamide.

5. Procédé selon l'une quelconque des revendications 1 à 4, caractérisé en ce que le mélange d'agents de suspension contient de 25 à 75% en poids, par rapport au mélange, de la composante (a) et de 75 à 25% en poids, par rapport au mélange, de la composante (b).

6. Procédé selon l'une quelconque des revendications 1 à 5, caractérisé en ce qu'on utilise, comme composante (b) du mélange d'agents de suspension, au moins un composé pris dans l'ensemble constitué par les méthyl-hydroxypropyl-celluloses que ont un degré de substitution moléculaire par le radical méthoxy de 1,4 à 2,4 et un degré de substitution moléculaire par le radical hydroxypropyle de 0,08 à 0,28 et qui ont, en solution aqueuse à 2% en poids, à 20°C, une viscosité de 20 à 500 · $10^{-3}$ Pa · s, et les poly-(alcools vinyliques) partiellement acétylés qui ont une teneur en radicaux acétyles de 5 à 25% en poids et une viscosité, mesurée à 20°C sur une solution aqueuse à 4% en poids, de 2 à 100 · $10^{-3}$ Pa · s.

**Claims**

1. Process for the polymerisation of vinyl chloride in an aqueous phase, in the presence of 0 to 20% by weight, relative to monomers employed, of monomers which can be copolymerised with vinyl chloride, or in the presence of 0.1 to 20% by weight, relative to monomers employed, of polymers which can be graft-copolymerised with vinyl chloride, or in the presence of the said quantities of monomers which can be copolymerised with vinyl chloride and of polymers which can be graft-copolymerised with vinyl chloride, oil-soluble activators which decompose to form free radicals, and a mixture of two or more high-molecular, surface-active suspending agents and, optionally, in the presence of emulsifiers, buffer substances and chain transfer agents, at 30 to 80°C, characterised by using 0.05 to 1% by weight, relative to monomers employed, of a mixture of suspending agents which is composed of

a) 10 to 90% by weight, relative to the mixture, of one or several copolymer(s) having a viscosity of 1 to $50 \times 10^{-3}$ Pa s, determined in a 2% strength by weight solution in isopropanol at 25°C, and consisting of 10 to 50% by weight, relative to the copolymer, of polymerised units of at least one compound of the formula

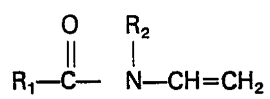 (1),

wherein

$R_1$ is H or denotes an alkyl radical having 1 to 4 C atoms,

$R_2$ is H or denotes $CH_3$—, and

50 to 90% by weight, relative to the copolymer, of polymerised units of vinyl acetate, and of

b) 90 to 10% by weight, relative to the mixture of suspending agents, of at least one suspending agent selected from the following substances: methylcellulose, methylhydroxyethylcellulose, methylhydroxypropylcellulose having a molecular degree of substitution by the methoxy group of 1.4 to 2.4 and a molar degree of substitution by the hydroxyalkoxy group, if present, of 0.08 to 0.28; or hydroxyethylcellulose or hydroxypropylcellulose having a molar degree of substitution of 1 to 3.5; or aminoethylhydroxypropylcellulose having a molar degree of substitution by the aminoethyl group of 0.05 to 1 and by the hydroxypropyl group of 3 to 5, the 2% strength by weight aqueous solution of the said cellulose ethers having a viscosity at 20°C of 20 to $500\times10^{-3}$ Pa s, or partly acetlyated polyvinyl alcohols having an acetate content of 5 to 25% by weight and a viscosity in a 4% strength by weight aqueous solution at 20°C of 2 to $100\times10^{-3}$ Pa s.

2. Process as claimed in claim 1, characterised in that 0.3% by weight, relative to monomers employed, of the mixture of suspending agents is employed.

3. Process as claimed in either of claims 1 or 2, characterised in that the component a) of the mixture of suspending agents which is employed is a copolymer which is composed of 20 to 40% by weight, relative to the copolymer, of polymerised units of at least one compound of the formula (1) and of 80 to 60% by weight, relative to the copolymer, of polymerised units of vinyl acetate.

4. Process as claimed in any one of claims 1 to 3, characterised in that the component a) of the mixture of suspending agents which is employed is at least one copolymer of vinyl acetate with N-vinyl-N-methylacetamide and/or with N-vinylacetamide.

5. Process as claimed in any one of claims 1 to 4, characterised in that the mixture of suspending agents contains 25 to 75% by weight, relative to the mixture, of the component a) and 75 to 25% by weight, relative to the mixture, of the component b).

6. Process as claimed in any one of claims 1 to 5, characterised in that the component b) of the mixture of suspending agents which is employed is at least one of the following compounds: methylhydroxypropylcellulose having a molecular degree of substitution by the methoxy group of 1.4 to 2.4 and by the hydroxypropyl group of 0.08 to 0.28, a 2% strength by weight aqueous solution thereof having a viscosity at 20°C of 20 to $500\times10^{-3}$ Pa s, or a partially acetylated polyvinyl alcohol having an acetate content of 5 to 25% by weight and a viscosity, in a 4% strength by weight aqueous solution, of 2 to $100\times10^{-3}$ Pa s at 20°C.